# EUROPÄISCHE PATENTSCHRIFT

(11) **EP 2 696 469 B1**
(45) Veröffentlichungstag und Bekanntmachung des Hinweises auf die Patenterteilung: **17.06.2015**
(21) Anmeldenummer: 12179897.9
(22) Anmeldetag: 09.08.2012
(51) Int. Cl.: H02K 1/27

(54) **Rotor für eine permanent erregte Synchronmaschine**
Rotor for a permanently excited synchronous engine
Rotor pour une machine synchrone à excitation permanente

(43) Veröffentlichungstag der Anmeldung: 12.02.2014
(73) Patentinhaber: Siemens Aktiengesellschaft, 80333 München (DE)
(72) Erfinder: Vollmer, Rolf, 36129 Gersfeld (DE); Mader, Daniel, 97616 Bad Neustadt a.d. Saale (DE)

(56) Entgegenhaltungen:
- DE-A1- 19 723 302
- DE-A1-102009 001 035
- DE-U1-202005 005 936
- JP-A- 5 207 690
- US-A- 5 786 650

## Beschreibung

Die Erfindung betrifft einen Rotor einer permanent erregten Synchronmaschine mit einer Welle und mit einer Achse, mit einem Blechpaket mit axialer Schichtung deren jeweilige Ebenen senkrecht zu der Achse ausgerichtet sind und zumindest zwei geometrisch unterschiedlich ausgestattete Schichten aufweist, wobei der Rotor Permanentmagnete in dafür vorgesehenen Taschen aufweist.

Permanent erregte Synchronmaschine weisen in oder auf ihrem Rotor Permanentmagnete auf. Dabei gibt es unterschiedlichste Möglichkeiten, Permanentmagnete im oder am Rotor vorzusehen. Insbesondere wenn Permanentmagnete innerhalb des Rotors angeordnet werden sollen, ist eine Fixierung dieser Permanentmagnete notwendig.

So ist aus der WO 2010/006737 bekannt, Magnete im Rotor vorzusehen.

Aus der DE 10 2009 001 035 A1 ist ein Rotor einer permanenterregten Synchronmaschine mit einer Welle bekannt, die sich um eine Achse dreht, einem Blechpaket mit axialer Schichtung, deren jeweiligen Ebenen senkrecht zu der Achse ausgerichtet sind, wobei das Blechpaket zwei geometrische unterschiedlich ausgestaltete Schichten aufweist, wobei die eine Schicht ein erstes Blech vorsieht, das zumindest am Außenumfang eine geschlossene Außenkontur aufweist und die andere Schicht mehrere, insbesondere gleichartige Blechsegmente vorsieht, wobei im axialen Verlauf des Blechpakets eine vorgebbare Schicht um diese einzelnen Schichten vorgesehen ist, wobei axial verlaufende Taschen im Blechpaket die durch Zwischenräumen zwischen den Blechsegmenten der Schicht und durch Ausnehmungen radial innerhalb der Außenkontur der Schicht gebildet sind und mit Permanentmagneten versehen sind.

Aus der DE 20 2005 005 936 U1 ist eine Rotoranordnung für eine elektrische Maschine mit einem Magnetträger bekannt, der eine im wesentlichen zylindrische Form mit einer inneren Öffnung hat, wobei in dem Magnetträger Taschen ausgebildet sind, die sich von der inneren Öffnung in Richtung des Außenumfangs des Magnetträgers erstrecken, am Außenumfang des Magnetträgers geschlossen sind und an der inneren Öffnung münden, Permanentmagneten, die in den Taschen angeordnet sind, und einer Welle, auf die der Magnetträger koaxial aufgebracht ist und Befestigungsmitteln zum Fixieren des Magnetträgers auf der Welle aufweisen, wobei zwischen dem Magnetträger und der Welle ein Luftspalt gebildet ist.

Die US 5 786 650 zeigt ein Blechpaket mit axialer Schichtung, wobei das Blechpaket zumindest zwei geometrisch unterschiedliche ausgeschaltete Schichten aufweist und wobei axial verlaufende Taschen vorgesehen sind, in die Permanentmagnete einsetzbar sind.

Die DE 197 23 302 A1 zeigt einen Läufer für elektrische Maschinen mit einem reluktanzunterstützten Permanentmagnetsystem, in dem die Magnete in Nuten eingelegt sind und die Feldlinien aus den Polflächen in tangentialer Richtung austreten.

Die JP 5-207690 A zeigt einen Rotor mit radial angeordneten Permanentmagneten, wobei zwischen den Permanentmagneten Blechsegmenten ausgebildet sind und wobei die Blechsegmenten durch axial verlaufende Bolzen gehalten sind.

Nachteilig bei der oben genannten Ausführungsform ist, dass die Herstellung relativ aufwändig ist und die Konstruktion der Rotoren eine vergleichsweise streuungsintensive Anordnung darstellt. Dies führt zu Wirkungsgradeinbußen des Synchronmotors.

Ausgehend davon liegt der Erfindung die Aufgabe zugrunde, einen Rotor für eine permanent erregte Synchronmaschine zu schaffen, der vergleichsweise streuungsarm ist und dennoch leicht und robust anzufertigen ist.

Die Lösung der gestellten Aufgabe gelingt durch einen Rotor einer permanent erregten Synchronmaschine mit
- einer Welle, die sich um eine Achse dreht,
- einem Blechpaket mit axialer Schichtung, deren jeweilige Ebenen senkrecht zu der Achse ausgerichtet sind und wobei das Blechpaket zumindest zwei geometrische unterschiedlich ausgestaltete Schichten aufweist, wobei die eine Schicht ein erstes Blech vorsieht, das zumindest am Außenumfang eine geschlossene Außenkontur aufweist und die andere Schicht mehrere, insbesondere gleichartige Blechsegmente vorsieht, wobei im axialen Verlauf des Blechpakets (2) eine vorgebbare Schichtung dieser einzelnen Schichten vorgesehen ist,
- axial verlaufende Taschen im Blechpaket (2), die durch Zwischenräume zwischen den Blechsegmenten der Schicht (RB2) und durch Ausnehmungen radial innerhalb der Außenkontur der Schicht gebildet sind,
- Permanentmagnete in diesen Taschen,
wobei sich zumindest in den axialen Abschnitten der Schicht zwischen benachbarten Blechsegmenten und den Permanentmagneten radial erstreckende Spalte einstellen, die mit einem Kleber versehen sind, wobei zwischen dem Blechpaket und der Welle eine im wesentlichen in zylindrische Hülse vorgesehen ist, deren Mantel radial unterhalb der Permanentmagnete zumindest abschnittsweise Ausnehmungen aufweisen, die als tangentiale Klebespalte zwischen Permanentmagnete und Welle dienen.

Die Lösung der gestellten Aufgabe gelingt auch durch einen Rotor mit den Merkmalen des Anspruchs 2.

Durch die erfindungsgemäße Ausgestaltung des Rotors wird nunmehr der Permanentmagnet innerhalb seiner axial verlaufenden Taschen an vorgebbaren Stellen mit der Welle und/oder mit den benachbarten Blechen verklebt. Die erfindungsgemäße Konstruktion mit, in axialer Richtung betrachtet, vergleichsweise bezüglich der Gesamtanzahl der Bleche, relativ wenigen Stegen, die lediglich bei den Blechen mit geschlossenen Kontur vorgesehen sind, führt zu einem streuungsarmen Aufbau des Rotors. Mit diesem erfindungsgemäßen Aufbau eines Rotors lässt sich ein vergleichsweise drehmomentstarker Synchronmotor herstellen. Des Weiteren kann durch die erfindungsgemäße Konstruktion auch eine hohe Drehzahl des Synchronmotors gewährleistet werden, die auch den dabei anstehenden Fliehkraftbeanspruchungen standhält.

Des Weiteren ist besonders vorteilhaft, dass durch die nunmehr erfindungsgemäße Konstruktion des Rotors sich auch ein vergleichsweise automatisierungs- und montagefreundlicher Aufbau des Rotors ergibt. Um die Festigkeit der Permanentmagnete innerhalb der Taschen weiter zu erhöhen, werden auch tangentiale Klebespalte, insbesondere zwischen den axialen Abschnitten der Blechsegmente und der Welle vorgesehen. Damit sind nun Klebungen sowohl seitlich der Permanentmagnete als auch radial unterhalb der Permanentmagnete durchführbar. Ein derartiger tangentialer Klebespalt ist gemäß der Erfindung durch eine zwischen Welle und Blechpaket angeordnete im Wesentlichen zylindrische Hülse gestaltet werden. Dabei ist die Hülse nunmehr mit der Welle drehfest verbunden und das Blechpaket mit seinen Blechen wird auf dieser Hülse positioniert. Dabei werden insbesondere die Bleche zur Positionierung und Fixierung des Blechpakets in dafür vorgesehene Schlitze auf die Hülse geschoben. Damit ergeben sich zusätzlich zu dem radial verlaufenden Klebespalt ebenfalls tangentiale Klebespalte.

Um die Klebespalte zu definieren, werden gemäß der Erfindung auf der Welle in Umgangsrichtung verlaufende Ringnuten vorgesehen, die damit ebenfalls zwischen Permanentmagnet und Welle tangentiale Klebespalte definierten

In einer besonders vorteilhaften Ausgestaltungen sind die Permanentmagnete in Flusskonzentrationsrichtung innerhalb des Rotors angeordnet, was aus technischer Hinsicht nur Sinn macht, wenn der Rotor eine Polzahl 2p>10 aufweist. Nur dann kann sich eine Flusskonzentration ausbilden.

Die Mantelfläche der zylindrischen Hülse weist vorteilhafterweise axial und in Umfangsrichtung verlaufende Stege auf. Durch Zusammenbau des Rotors stellen sich damit die notwendigen Klebespalte ein.

Die Flusskonzentration wird vorzugsweise dadurch erreicht, dass die Permanentmagnete einen trapezförmigen Querschnitt aufweisen. Die schmalere Seite dieses Querschnitts weist dabei entweder in Richtung Außenkontur des Rotors oder in Richtung Welle.

Ebenso sind selbstverständlich Permanentmagnete mit rechteckigem Querschnitt in dementsprechende ausgebildete Taschen einsetzbar.

Der konstruktive Aufbau des Rotors eignet sich vor allem für Ferritmagnete, die bevorzugt in Flusskonzentrationsrichtung angeordnet werden. Erfindungsgemäß wird dabei nun eine mit Selten-Erden-Magneten vergleichbare Flussliniendichte im Luftspalt der dynamoelektrischen Maschine geschaffen, ohne Einbußen bei der Drehzahl und Effizienz der Maschine in Kauf nehmen zu müssen.

Die Erfindung sowie vorteilhafte Ausgestaltungen der Erfindung sind den prinzipiell dargestellten Ausführungsbeispielen näher zu entnehmen. Darin zeigen:
- FIG 1 bis 6: teilperspektivische Darstellungen unterschiedlicher Ausführungsformen eines Rotors,
- FIG 7: prinzipieller Aufbau einer permanent erregten Synchronmaschine im Längsschnitt,
- FIG 8: Querschnitt eines Rotors.

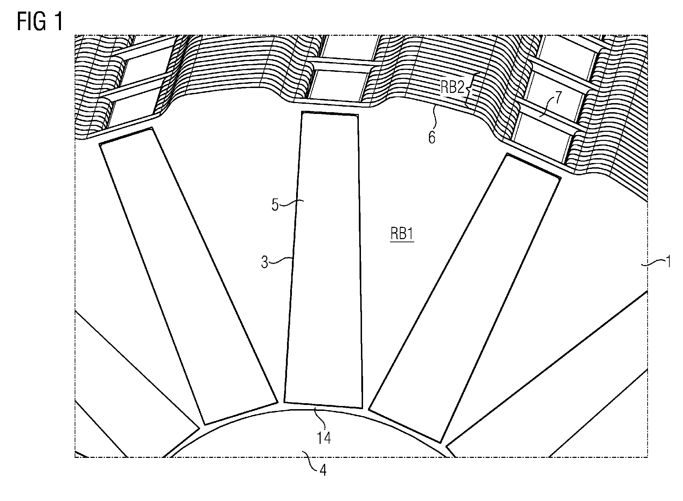

FIG 1 zeigt in einer teilperspektivischer Darstellung eine Welle 4, auf der die Bleche RB1 und RB2 axial geschichtet angeordnet sind. Dabei sind die Bleche RB1 sowohl in ihrer Außenkontur 6 als auch in ihrer Innenkontur 14 geschlossen. D.h., diese Schicht eines Blechpakets 2 eines Rotors 1 beinhaltet ein einstückiges Blech. Die nächste Schicht des Blechpakets 2, weist in Umfangsrichtung betrachtet mehrere Blechsegmenten RB2 auf. Die axial folgenden Schichten sind ebenso ausgeführt. In Umfangsrichtung betrachtet sind nun axial verlaufende Pole gebildet, wobei zwischen den Blechsegmenten axial verlaufende Taschen ausgebildet sind in denen sich Permanentmagnete befinden. Die Permanentmagnete 5 sind durch die Stege 14 der Bleche RB1 im Bereich der Blechsegmente von RB 2 von der Welle 4 beabstandet.

Es bilden sich dort definierte Klebespalte 8 aus, die zur Fixierung der Permanentmagnete 5 in den Taschen mit einem geeigneten Kleber gefüllt sind. Die radiale Höhe der Klebspalte 8 wird durch die radiale Höhe der Stege 14 bestimmt. Die Außenkontur des gesamten Blechpakets 2 ist im Bereich der magnetischen Pole unabhängig von den Blechen RB1 und RB 2 identisch.

Die Permanentmagnete 5 sind, wie in dieser Darstellung dargestellt, in ihrem Querschnitt trapezförmig ausgeführt, damit ergibt sich in besonders vorteilhafter Weise die Flusskonzentration in einem erfindungsgemäß gestalteten Blechpaket des Rotors 1.

Bei einem Blechpaket 2 des Rotors 1 sind in vorteilhafter Weise sowohl das erste Blech des Blechpakets als auch das letzte Blech des Blechpakets mit einem RB1-Blech versehen. Dieser Aufbau dient der Kompaktierung des Blechpakets 2.

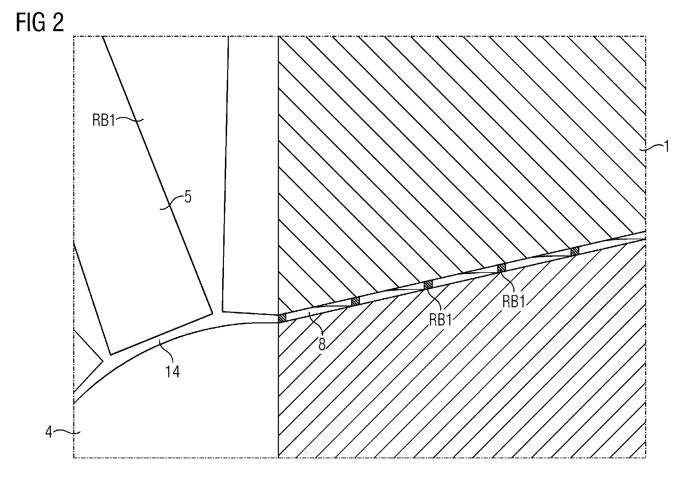

In der gleichen Ausführungsform zeigt FIG 1 nunmehr, dass neben den radialen Klebespalten 3 zwischen den Blechen RB2 und dem Permanentmagneten 5 auch radial unterhalb der Permanentmagnete 5 sich zwischen den Permanentmagneten 5 und der Welle 4 ein tangentialer Klebespalt 8 einstellt. In dieser Darstellung und FIG 2 ist besonders gut zu erkennen, dass das Blechpaket 2 nur über die Bleche RB1 Kontakt mit der Welle 4 aufweist.

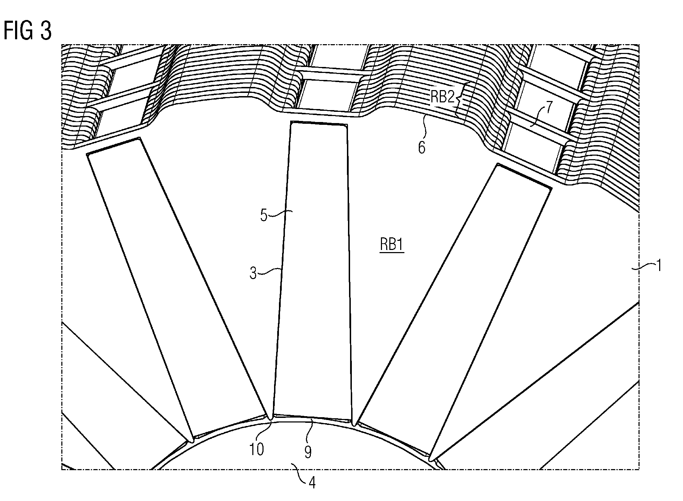

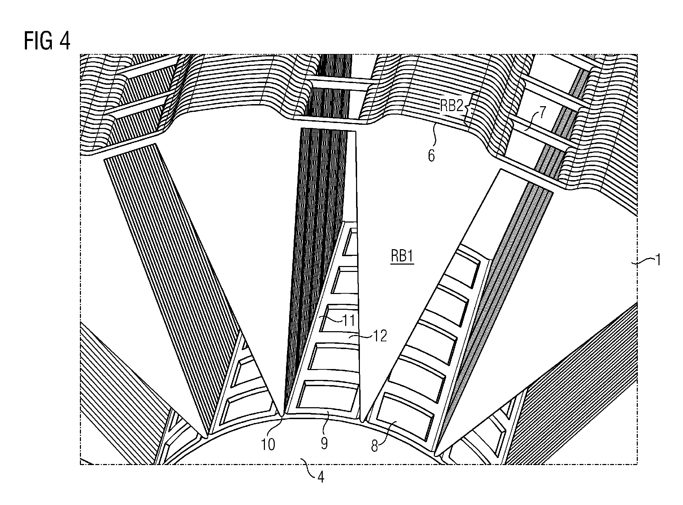

In einer weiteren nicht näher dargestellten Ausführungsform ist auch ein Blechpaket 2 des Rotors 1 vorstellbar, bei dem die axiale Schichtung aus jeweils einstückigen Blechen erfolgt. Pro Blechpaket 2 sind dabei zwei geometrisch unterschiedliche Blechtypen vorgesehen. Die einen weisen an ihrer Außenkontur einen geschlossenen Steg auf, während die anderen Bleche nur an ihrer Innenkontur einen geschlossenen Steg aufweisen. Durch eine vorgebbare Schichtung dieser beiden einstückigen Blechtypen werden somit ebenfalls axial verlaufende Taschen geschaffen in die Permanentmagnete 5 eingesetzt werden. Klebespalte 8 sind dabei nun zwischen den Blechen mit geschlossener Außenkontur und der Welle 4 geschaffen. FIG 3 zeigt ein weiteres Ausführungsbeispiel bei dem insbesondere zwischen Welle 4 und dem Blechpaket 2 eine Hülse 9 vorgesehen ist, die, wie auch FIG 4 genauer zu sehen, tangentiale Klebespalte zwischen dem Permanentmagneten 5 und der Welle 4 gestattet. Die Hülse 9 wird dabei insbesondere von axial verlaufenden Stegen 11 und den in Umfangsrichtung verlaufenden Stegen 12 gebildet. Vorteilhafterweise sind dabei die Bleche RB1 und die Blechsegmente RB2 auf den axialen Stegen 11 in einem Schlitz 10 fixiert und positioniert. In dieser Ausführungsform weisen die Bleche RB 1 lediglich an Ihrer Außenkontur eine mechanische Verbindung - also einen Steg 7 auf.

Der axiale Abstand der Stege 7 und der Stege 12 der Hülse 9 kann identisch sein, ist aber an den Bedürfnissen des Rotoraufbaus auszurichten. Je nach erforderlicher Klebermenge für die Permanentmagnete 5 sind die Stege 12 sowohl in ihrem axialen Abstand, als auch in ihrer radialen Höhe zu bemessen.

Der axiale Abstand der Stege 7 bemisst sich unter anderem an der erforderlichen Fliehkraftbeanspruchung.

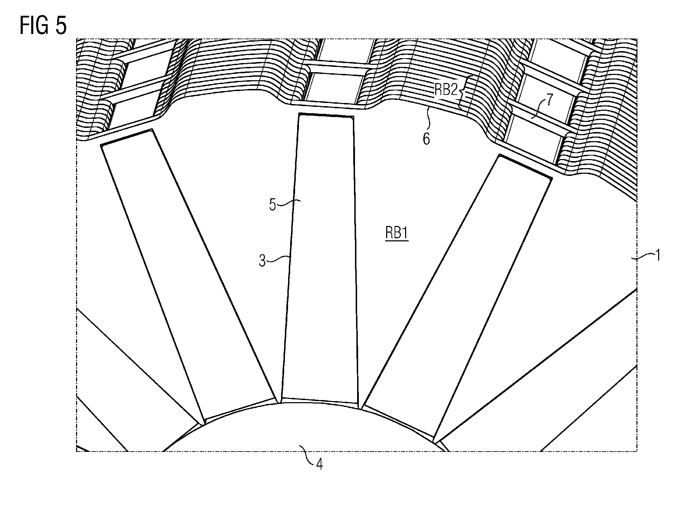

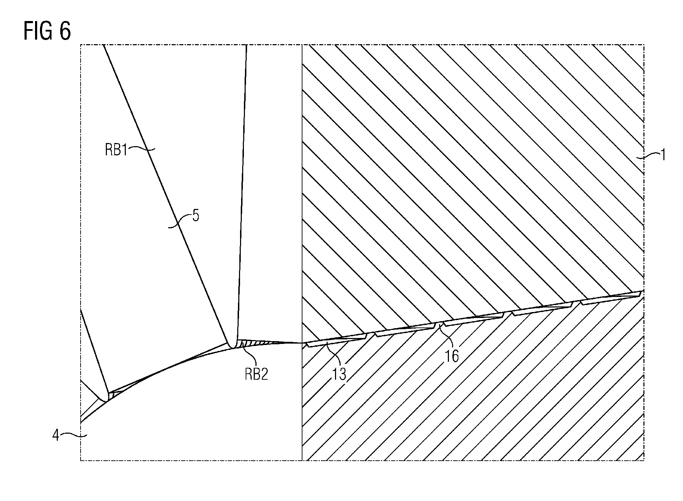

In einer weiteren Ausführungsform gemäß FIG 5 und 6 werden nunmehr die tangentialen Klebespalte 8 dadurch erreicht, dass die Welle 4 Ringnuten 13 aufweist, so dass die Permanentmagnete 5 nun auf den verbleibenden Stegen 16 der Welle 4 anliegen. Damit geben sich abschnittsweise tangentiale Klebespalte 8. Ansonsten unterscheidet sich der Aufbau des Blechpakets 2 von dem der Ausführungsform nach FIG 3 und FIG 4 nicht.

Ein derartiger Rotor 1 ist besonders vorteilhaft für permanent erregte Synchronmaschinen 22 mit vergleichsweise hohen Drehzahlen. Des Weiteren kann derartige permanente Synchronmotoren 22 auch bei Traktionsfahrzeugen wie z.B. Schienenfahrzeugen oder E-Cars eingesetzt werden.

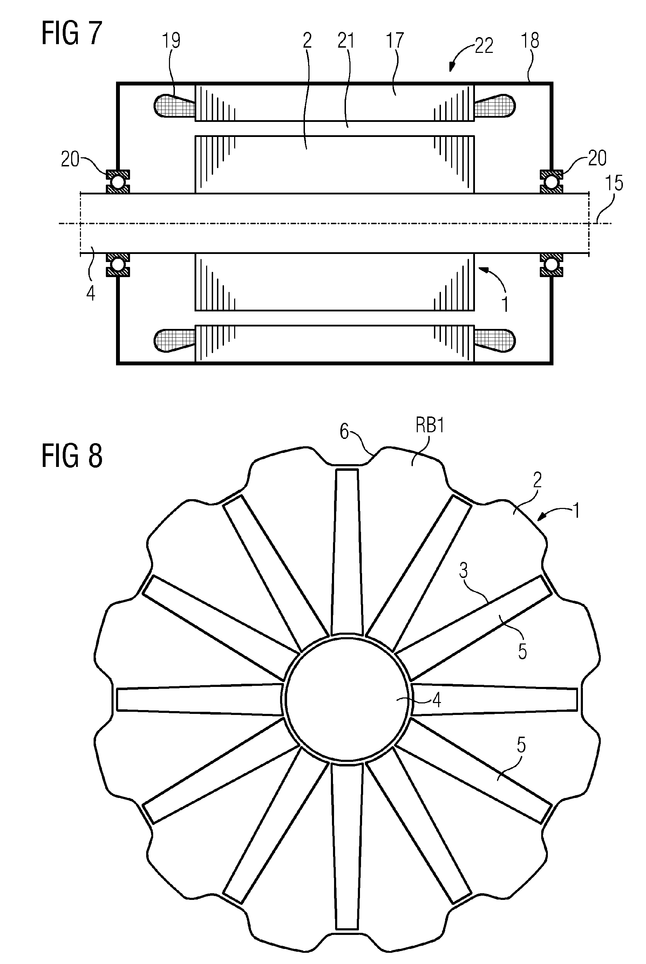

Eine derartige permanent erregte Synchronmaschine 22 beispielsweise gemäß FIG 7 weist einen Stator 17 auf in dessen Nuten ein Wicklungssystem 19 angeordnet ist. Im Betrieb der permanent erregten Synchronmaschine 22 wird durch elektromagnetische Wechselwirkung des Stators 17 mit dem Rotor 1 über einen Luftspalt 21 die Welle 4 angetrieben bzw. elektrische Energie erzeugt. Die Welle 4 ist dabei über Lager 20 an einem Gehäuse 18 abgestützt.

FIG 8 zeigt im Querschnitt einen Rotor 1 mit zwölf Polen, wobei die Permanentmagnete 5 in Flusskonzentration angeordnet sind. Die Außenkontur des Rotors 1 ist dabei derart gestaltet, dass sich ein nahezu sinusförmiger Verlauf des Luftspaltfeldes ergibt. Dies wird dadurch erreicht, dass im Beriech der Pole der Luftspalt 21 eine geringere radiale Abmessungen aufweist, als dies im Bereich der Permanentmagnete 5 der Fall ist.

Vorteilhafterweise ist dabei der Luftspalt 21 in der Polmitte die geringste radiale Abmessung auf, während der radiale Abstand zu den Polrändern hin zunimmt.

## Patentansprüche

1. Rotor (1) einer permanent erregten Synchronmaschine (22) mit
- einer Welle (4), die sich um eine Achse (15) dreht,
- einem Blechpaket (2) mit axialer Schichtung (RB1,RB2), deren jeweilige Ebenen senkrecht zu der Achse (15) ausgerichtet sind und wobei das Blechpaket (2) zumindest zwei geometrische unterschiedlich ausgestaltete Schichten aufweist, wobei die eine Schicht (RB1) ein erstes Blech vorsieht, das zumindest am Außenumfang eine geschlossene Außenkontur (6) aufweist und die andere Schicht (RB2) mehrere, insbesondere gleichartige Blechsegmente vorsieht, wobei im axialen Verlauf des Blechpakets (2) eine vorgebbare Schichtung dieser einzelnen Schichten (RB1, RB2) vorgesehen ist,
- axial verlaufende Taschen im Blechpaket (2), die durch Zwischenräume zwischen den Blechsegmenten der anderen Schicht (RB2) und durch Ausnehmungen radial innerhalb der Außenkontur (6) der ersten Schicht (RB1) gebildet sind,
- Permanentmagnete (5) in diesen Taschen,
**dadurch gekennzeichnet, dass** sich zumindest in den axialen Abschnitten der anderen Schicht (RB2) zwischen benachbarten Blechsegmenten und den Permanentmagneten (5) radial erstreckende Spalte (3) einstellen, die mit einem Kleber versehen sind, wobei zwischen dem Blechpaket (2) und der Welle (4) eine im wesentlichen zylindrische Hülse (9) vorgesehen ist, deren Mantel radial unterhalb der Permanentmagnete (5) zumindest abschnittsweise Ausnehmungen aufweist, die als tangentiale Klebespalte (8) zwischen Permanentmagnete (5) und Welle (4) dienen.

2. Rotor (1) einer permanent erregten Synchronmaschine (22) mit
- einer Welle (4), die sich um eine Achse (15) dreht,
- einem Blechpaket (2) mit axialer Schichtung (RB1,RB2), deren jeweilige Ebenen senkrecht zu der Achse (15) ausgerichtet sind und wobei das Blechpaket (2) zumindest zwei geometrische unterschiedlich ausgestaltete Schichten aufweist, wobei die eine Schicht (RB1) ein erstes Blech vorsieht, das zumindest am Außenumfang eine geschlossene Außenkontur (6) aufweist und die andere Schicht (RB2) mehrere, insbesondere gleichartige Blechsegmente vorsieht, wobei im axialen Verlauf des Blechpakets (2) eine vorgebbare Schichtung dieser einzelnen Schichten (RB1, RB2) vorgesehen ist,
- axial verlaufende Taschen im Blechpaket (2), die durch Zwischenräume zwischen den Blechsegmenten der anderen Schicht (RB2) und durch Ausnehmungen radial innerhalb der Außenkontur (6) der ersten Schicht (RB1) gebildet sind,
- Permanentmagnete (5) in diesen Taschen,
**dadurch gekennzeichnet, dass** sich zumindest in der Axialen Abschnitten der anderen Schicht (RB2) zwischen benachbarten Blechsegmenten und den Permanentmagneten (5) radial erstreckende Spalte (3) einstellen, die mit einem Kleber versehen sind, wobei zwischen den Permanentmagneten (5) und der Welle (4), in den axialen Abschnitten der Schichtung (RB1,RB2) tangentiale Klebespalte (8) erstrecken, wobei die Welle (4) Ringnuten (13) aufweist, insbesondere im axialen Bereich der Blechsegmente (RB2), um die vorgenannten tangentialen Klebespalte (8) vorzusehen

3. Rotor (1) nach Anspruch 1, **dadurch gekennzeichnet, dass** die Hülse (9) aus Stegen (11,12) aufgebaut ist, die in axialer Richtung und in Umfangsrichtung verlaufen.

4. Rotor (1) nach Anspruch 3, **dadurch gekennzeichnet, dass** die Hülse (9) auf ihren axial verlaufenden Stegen (11) zumindest jeweils einen Schlitz (10) zur Fixierung der Bleche (RB1) aufweist.

5. Rotor (1) nach einem der vorhergehenden Ansprüche, **dadurch gekennzeichnet , dass** die Permanentmagnete (5) in Flusskonzentration angeordnet sind und der Rotor (1) zumindest eine Polzahl 2p>10 aufweist.

6. Rotor (1) nach einem der vorhergehenden Ansprüche, **dadurch gekennzeichnet, dass** die Permanentmagnete (5) einen trapezförmigen Querschnitt aufweisen.

7. Rotor (1) nach einem der vorhergehenden Ansprüche, **dadurch gekennzeichnet, dass** die Schicht (RB1) Bleche eine Innenkontur (14) aufweisen, die an der Welle (4) oder einer Hülse (9) anliegt und somit eine in Umfangsrichtung betrachtet geschlossene Tasche bildet.

8. Rotor (1) nach einem der vorhergehenden Ansprüche, **da- durch gekennzeichnet,** dass die Permanentmagnete (5) Hartferrite sind.

9. Permanenterregte Synchronmaschine (22) mit einem Rotor (1) nach einem der vorhergehenden Ansprüche.

10. Elektrisch angetriebenes Fahrzeug mit zumindest einer permanenterregten Synchronmaschine (22) nach Anspruch 9.

## Claims

1. Rotor (1) of a permanently excited synchronous machine (22) having
- a shaft (4) which rotates about an axis (15),
- a laminated core (2) with an axial layering arrangement (RB1, RB2), the respective planes of which are aligned at right angles to the axis (15) and wherein the laminated core (2) comprises at least two layers which are configured to be geometrically different, wherein the one layer (RB1) provides a first plate which comprises at least one closed outer contour (6) at the outer periphery and the other layer (RB2) provides a number of, in particular, similar plate segments, wherein a predeterminable layering arrangement of these individual layers (RB1, RB2) is provided in the axial course of the laminated core (2),
- pockets running axially in the laminated core (2), which are formed by interspaces between the plate segments of the other layer (RB2) and by recesses radially within the outer contour (6) of the first layer (RB1),
- permanent magnets (5) in these pockets,
**characterised in that** radially extending gaps (3) develop at least in the axial sections of the other layer (RB2) between adjacent plate segments and the permanent magnets (5), said gaps being provided with an adhesive, wherein a substantially cylindrical sleeve (9) is provided between the laminated core (2) and the shaft (4), the casing of which comprises recesses, at least in sections, radially below the permanent magnets (5), said recesses being used as tangential adhesive gaps (8) between permanent magnets (5) and shaft (4).

2. Rotor (1) of a permanently excited synchronous machine (22) having
- a shaft (4) which rotates about an axis (15),
- a laminated core (2) with an axial layering arrangement (RB1, RB2), the respective planes of which are aligned at right angles to the axis (15) and wherein the laminated core (2) comprises at least two layers which are configured to be geometrically different, wherein the one layer (RB1) provides a first plate which comprises a closed outer contour (6) at at least the outer periphery and the other layer (RB2) provides a number of, in particular, similar plate segments, wherein a predeterminable layering arrangement of these individual layers (RB1, RB2) is provided in the axial course of the laminated core (2),
- pockets running axially in the laminated core (2), which are formed by interspaces between the plate segments of the other layer (RB2) and by recesses radially within the outer contour (6) of the first layer (RB1),
- permanent magnets (5) in these pockets,
**characterised in that** radially extending gaps (3) develop at least in the axial sections of the other layer (RB2) between adjacent plate segments and the permanent magnets (5), said gaps being provided with an adhesive, wherein tangential adhesive gaps (8) extend between the permanent magnet (5) and the shaft (4) into the axial sections of the layering arrangement (RB1,RB2), wherein the shaft (4) comprises annular grooves (13), in particular in the axial region of the plate segments (RB2), in order to provide the aforementioned tangential adhesive gaps (8).

3. Rotor (1) according to claim 1, **characterised in that** the sleeve (9) is made of webs (11, 12) which run in the axial direction and in the peripheral direction.

4. Rotor (1) according to claim 3, **characterised in that** the sleeve (9) comprises at least one slot (10) respectively for fixing the plate (RB1) on its axially running webs (11).

5. Rotor (1) according to one of the preceding claims, **characterised in that** the permanent magnets (5) are arranged in the flux concentration and the rotor (1) comprises at least a number of poles 2p>10.

6. Rotor (1) according to one of the preceding claims, **characterised in that** the permanent magnets (5) have a trapezoid cross-section.

7. Rotor (1) according to one of the preceding claims, **characterised in that** the layer (RB1) plates comprise an inner contour (14), which rests on the shaft (4) or a sleeve (9) and thus forms a closed pocket when viewed in the peripheral direction.

8. Rotor (1) according to one of the preceding claims, **characterised in that** the permanent magnets (5) are hard ferrite.

9. Permanently excited synchronous machine (22) having a rotor (1) according to one of the preceding claims.

10. Electrically driven vehicle having at least one permanently excited synchronous machine (22) according to claim 9.

## Revendications

1. Rotor (1) d'une machine (22) synchrone à excitation permanente comprenant
- un arbre (4), qui tourne autour d'un axe (15),
- un paquet (2) de tôles à stratification (RB1, RB2) axiale, dont les plans respectifs sont dirigés perpendiculairement à l'axe (15) et dans lequel le paquet (2) de tôles a au moins deux couches de conformation géométrique différente, l'une des couches (RB1) comportant une première tôle, qui a un contour (6) extérieur fermé au moins sur le pourtour extérieur et l'autre couche (RB2) comportant plusieurs segments de tôles, notamment de même type, dans lequel il est prévu, dans l'étendue axiale du paquet (2) de tôles, une stratification pouvant être donnée à l'avance de ces couches (RB1, RB2) individuelles,
- des poches s'étendant axialement dans le paquet (2) de tôles, qui sont formées par des espaces intermédiaires entre les segments de tôles de l'autre couche (RB2), et par des évidements à l'intérieur radialement du contour (6) extérieur de la première couche (RB1),
- des aimants (5) permanents dans ces poches,
**caractérisé en ce qu'**il s'établit, au moins dans les parties axiales de l'autre couche (RB2), entre des segments de tôles voisins et les aimants (5) permanents, des fentes (3) s'étendant radialement, qui sont pourvues d'une colle, dans lequel il est prévu, entre le paquet (2) de tôles et l'arbre (4), un manchon (9) sensiblement cylindrique, dont la surface latérale a, en dessous radialement des aimants (5) permanents, au moins par endroits des évidements, qui servent de fentes (8) tangentielles de collage entre des aimants (5) permanents et l'arbre (4).

2. Rotor (1) d'une machine (22) synchrone à excitation permanente comprenant
permanente comprenant
- un arbre (4), qui tourne autour d'un axe (15),
- un paquet (2) de tôles à stratification (RB1, RB2) axiale, dont les plans respectifs sont dirigés perpendiculairement à l'axe (15) et dans lequel le paquet (2) de tôles a au moins deux couches de conformation géométrique différente, l'une des couches (RB1) comportant une première tôle, qui a un contour (6) extérieur fermé au moins sur le pourtour extérieur et l'autre couche (RB2) comportant plusieurs segments de tôles, notamment de même type, dans lequel il est prévu, dans l'étendue axiale du paquet (2) de tôles, une stratification pouvant être donnée à l'avance de ces couches (RB1, RB2) individuelles,
- des poches s'étendant axialement dans le paquet (2) de tôles, qui sont formées par des espaces intermédiaires entre les segments de tôles de l'autre couche (RB2), et par des évidements à l'intérieur radialement du contour (6) extérieur de la première couche (RB1),
- des aimants (5) permanents dans ces poches,
**caractérisé en ce qu'**il s'établit, au moins dans les parties axiales de l'autre couche (RB2), entre les segments de tôles voisins et les aimants (5) permanents, des fentes (3) qui s'étendent radialement et qui sont pourvues d'une colle, dans lequel des fentes (8) tangentielles de collage s'étendent entre les aimants (5) permanents et l'arbre (4), dans les parties axiales de la stratification (RB1, RB2), l'arbre (4) ayant des rainures (13) annulaires, notamment dans la partie axiale des segments (RB2) de tôles, pour ménager les fentes (8) tangentielles de collage mentionnées ci-dessus.

3. Rotor (1) suivant la revendication 1, **caractérisé en ce que** le manchon (9) est constitué de réglettes (11, 12), qui s'étendent dans la direction axiale et dans la direction périphérique.

4. Rotor (1) suivant la revendication 3, **caractérisé en ce que** le manchon (9) a, sur ses réglettes (11) s'étendant axialement, au moins respectivement une fente (10) pour l'immobilisation des tôles (RB1).

5. Rotor (1) suivant l'une des revendications précédentes, **caractérisé en ce que** les aimants (5) permanents sont disposés en une concentration de flux et le rotor (1) a au moins un nombre de pôles 2p>10.

6. Rotor (1) suivant l'une des revendications précédentes, **caractérisé en ce que** les aimants (5) permanents ont une section transversale trapézoïdale.

7. Rotor (1) suivant l'une des revendications précédentes, **caractérisé en ce que**, dans la couche (RB1), des tôles ont un contour (14) extérieur qui s'applique à l'arbre (4) ou à un manchon (9) et forment ainsi une poche fermée considérée dans la direction périphérique.

8. Rotor (1) suivant l'une des revendications précédentes, **caractérisé en ce que** les aimants (5) permanents sont des ferrites dures.

9. Machine (22) synchrone à excitation permanente ayant un rotor (1) suivant l'une des revendications précédentes.

10. Véhicule électrique ayant au moins une machine (22) synchrone à excitation permanente suivant la revendication 9.
